# EUROPÄISCHE PATENTSCHRIFT

(11) **EP 4 298 880 B1**
(45) Veröffentlichungstag und Bekanntmachung des Hinweises auf die Patenterteilung: **14.05.2025**
(21) Anmeldenummer: 23180239.8
(22) Anmeldetag: 20.06.2023
(51) Int. Cl.: A01B 59/048, A01C 7/20, A01B 63/02, A01B 49/06, A01B 59/06, A01B 73/06, A01B 79/02

(54) **SCHWENKARM FÜR EINE LANDWIRTSCHAFTLICHE MASCHINE**
PIVOTING ARM FOR AN AGRICULTURAL MACHINE
BRAS OSCILLANT POUR MACHINE AGRICOLE

(30) Priorität: 30.06.2022 DE 102022116336
(43) Veröffentlichungstag der Anmeldung: 03.01.2024
(73) Patentinhaber: Lemanski, Olgierd, 29614 Soltau (DE)
(72) Erfinder: Lemanski, Olgierd, 29614 Soltau (DE)
(74) Vertreter: Patentanwälte Thömen & Körner

(56) Entgegenhaltungen:
- EP-A1- 3 804 484
- EP-A2- 0 432 815
- WO-A1-2021/156301
- DE-A1- 102014 000 692
- KR-B1- 101 016 765
- US-A- 3 949 539

## Beschreibung

Die Erfindung betrifft einen Schwenkarm für eine landwirtschaftliche Maschine, vorzugsweise eine Zugmaschine, der mit dem einen Ende an der Heckseite oder vorzugsweise an der Frontseite der landwirtschaftlichen Maschine über eine an der Heckseite oder Frontseite vorgesehene Kopplungsvorrichtung, insbesondere über eine Dreipunktaufnahme, angekoppelt ist, und der mit dem anderen Ende mit einer Bodenbereitungseinheit, vorzugsweise Saatbettbereitungseinheit, gekoppelt ist.

Eine solche landwirtschaftliche Maschine ist aus der DE 10 2014 000 692 A1 bekannt. Nachteilig an dem dort vorgesehenen Schwenkarm ist, dass beim Wechsel der Arbeitsposition der mit dem Schwenkarm verbundenen Saatbettbereitungseinheit von der linken auf die rechte Seite und umgekehrt hohe seitliche Belastungen an der landwirtschaftlichen Maschine auftreten können. Dies kann insbesondere im hügeligen oder bergigen Gelände schlimmstenfalls zu einem Umkippen der landwirtschaftlichen Maschine führen. Dadurch, dass die Saatbettbereitungseinheit vertikal verschwenkt wird, werden beim Wechsel von der linken auf die rechte Seite und umgekehrt enorme Drehmomente auf die landwirtschaftliche Maschine ausgeübt. Der Schwerpunkt der Saatbettbereitungseinheit beim Schwenken wandert nach oben, wodurch die Stabilität der landwirtschaftlichen Maschine gefährdet ist. Die Arbeitsbreiten sind zur Vermeidung einer solchen Gefährdung auf maximal drei Meter beschränkt. Beim Transport der Saatbettbereitungseinheit ist zudem die Sicht nach vorne aus dem Fahrerhaus der landwirtschaftlichen Maschine eingeschränkt.

Die Schriften DE 10 2014 000692 A1, US 3 949 539 A, EP 3 804 484 A1 und WO 2021/156301 A1 beschreiben bekannte Schwenkarme.

Die Schriften EP 0 432 815 A2 und KR 101 016 765 B1 beschreiben bekannte Schwenkarme, ohne das das sich ein drittes Armsegment aus einer Ausganglage in horizontaler Ebene verlängert oder verkürzt.

Ausgehend von diesem Stand der Technik liegt der Erfindung die Aufgabe zugrunde, eine landwirtschaftliche Maschine mit Schwenkarm zu verbessern. Diese Aufgabe wird bei einer landwirtschaftlichen Maschine durch die Merkmale des Anspruchs 12 gelöst. Weiterbildungen und vorteilhafte Ausgestaltungen der Erfindung ergeben sich aus den Unteransprüchen.

Durch das mittels des erfindungsgemäßen Schwenkarms erreichte horizontale Schwenken der Bodenbereitungseinheit, insbesondere Bodenbereitungseinheit, werden die auf die landwirtschaftliche Maschine wirkenden Seitenkräfte beim Wechsel der Arbeitsposition von der linken zur rechten Seite und umgekehrt signifikant reduziert.

Weitere Merkmale der Erfindung ergeben sich aus den Ansprüchen, den Figuren und der Figurenbeschreibung.

Die Erfindung wird nun anhand eines bevorzugten Ausführungsbeispiels sowie unter Bezugnahme auf die beigefügten Zeichnungen näher erläutert. Es zeigen:
- Fig. 1: eine perspektivische Ansicht einer landwirtschaftlichen Maschine mit einem an der Frontseite der landwirtschaftlichen Maschine angekoppelten Schwenkarm, der am freien Ende mit einer Saatbettbereitungseinheit gekoppelt ist,
- Fig. 2: eine perspektivische Ansicht der in Fig. 1 dargestellten landwirtschaftlichen Maschine mit zusätzlich an der Heckseite angekoppeltem Bodenbearbeitungsgerät bei der Arbeit,
- Fig. 3: eine perspektivische Ansicht des erfindungsgemäßen Schwenkarms im ausgeschwenkten Zustand mit der Trägervorrichtung und dem Tank auf der einen Seite und der Saatbettbereitungseinheit auf der anderen Seite,
- Fig. 4: eine perspektivische Ansicht des erfindungsgemäßen Schwenkarms im eingeschwenkten Zustand mit der Trägervorrichtung und dem Tank auf der einen Seite und der Saatbettbereitungseinheit auf der anderen Seite,
- Fig. 5: eine perspektivische Ansicht des erfindungsgemäßen Schwenkarms im ausgeschwenkten Zustand, mit einer Trägervorrichtung auf der einen Seite, und
- Fig. 6: eine perspektivische Ansicht des erfindungsgemäßen Schwenkarms im eingeschwenkten Zustand, wie in Fig. 4 dargestellt, auf einem Anhänger.

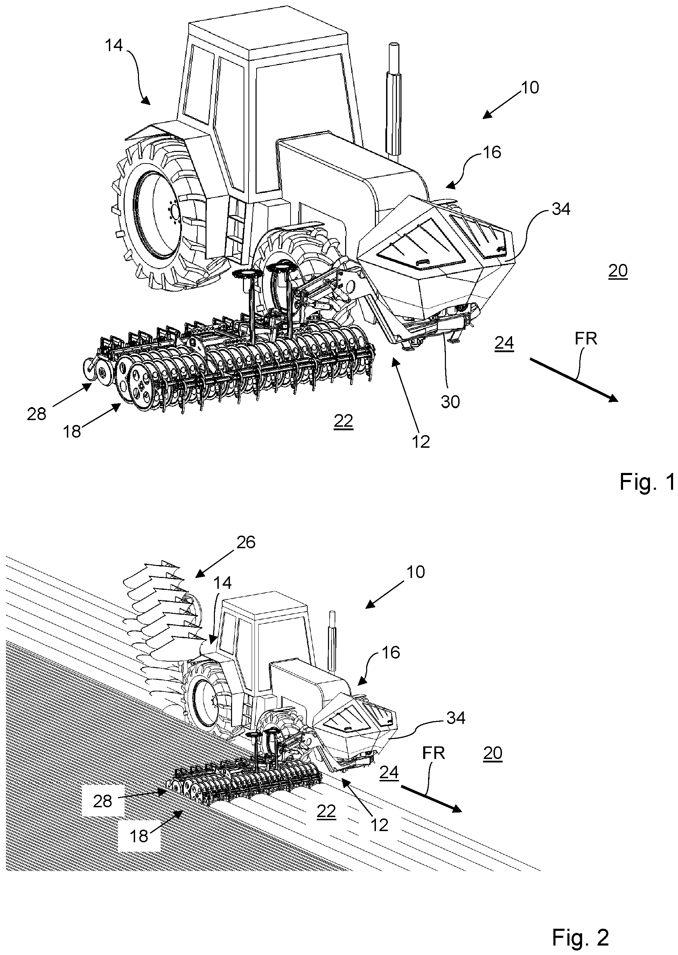

Werden in den Fig. 1 bis 6 gleiche Bezugsziffern verwendet, so bezeichnen diese auch gleiche Teile oder Bereiche.

Fig. 1 zeigt in perspektivischer Ansicht eine landwirtschaftliche Maschine 10, nämlich eine als Traktor ausgebildete Zugmaschine, mit einem Schwenkarm 12, der mit dem einen Ende über eine Trägervorrichtung 30 an der Frontseite 16 der landwirtschaftlichen Maschine 10 über eine an der Frontseite 16 vorgesehene Kopplungsvorrichtung, nämlich eine Dreipunktaufnahme, insbesondere einen Dreipunkt-Kraftheber, angekoppelt ist, und der mit dem anderen Ende mit einer Saatbettbereitungseinheit 18 gekoppelt ist.

Der Schwenkarm 12 ist hierbei derart ausgebildet, dass die Saatbettbereitungseinheit 18 in verschiedene Arbeitspositionen, nämlich auf die in Fahrtrichtung FR der landwirtschaftlichen Maschine 10 gesehen linke Seite 20 oder rechte Seite 22 oder in jede Position zwischen der linken Seite 20 und der rechten Seite 22, insbesondere in eine zentrale Position 24 vor der Frontseite der landwirtschaftlichen Maschine 10, auf den Boden positionierbar ist. Vorliegend befindet sich die Saatbettbereitungseinheit 18 in Fahrtrichtung FR der landwirtschaftlichen Maschine 10 gesehen auf der rechten Seite 22 in etwa auf Höhe der Trägervorrichtung 30 in einer Arbeitsposition.

Der Schwenkarm 12 kann die Saatbettbereitungseinheit 18 in einer Ebene horizontal vor der Frontseite 16 der landwirtschaftlichen Maschine 10 verschwenken.

Der Schwenkarm 12 ist derart ausgebildet und bewegbar, dass die Saatbettbereitungseinheit 18 vom Boden anhebbar und auf den Boden absetzbar ist, wobei das Anheben oder Absetzen der Saatbettbereitungseinheit 18 an verschiedenen Positionen durchführbar ist, vorzugsweise jedoch an einer Position, an der die durch das Anheben bewirkte seitliche Belastung der landwirtschaftlichen Maschine 10 keinen negativen Effekt auf die landwirtschaftliche Maschine 10 hat. Ein Anheben der Saatbettbereitungseinheit 18 aus der in Fig. 1 gezeigten Arbeitsposition könnte beispielsweise einen negativen Effekt aufgrund der seitlichen Belastung auf die landwirtschaftliche Maschine 10 haben. Daher sollte ein Anheben und Absetzen der Saatbettbereitungseinheit 18 bevorzugt somit in der zentralen Position 24 vor der Frontseite 16 der landwirtschaftlichen Maschine 10 erfolgen. Ausgehend von der Ankoppelung des Schwenkarms 12 an die landwirtschaftliche Maschine 10, wegweisend von der landwirtschaftlichen Maschine 10 und in Längsrichtung der landwirtschaftlichen Maschine 10 gesehen, kann das Anheben und Absetzen der Saatbettbereitungseinheit 18 gegebenenfalls auch innerhalb eines spitzen Winkels erfolgen.

Weiterhin ist der Schwenkarm 12 derart ausgebildet und bewegbar, dass - wenn die Position der Saatbettbereitungseinheit 18 beim Absetzen nicht mit der gewollten Arbeitsposition übereinstimmt -die Saatbettbereitungseinheit 18 nach dem Absetzen auf den Boden mittels des Schwenkarms 12 während der Vorwärtsfahrt der landwirtschaftlichen Maschine 10 in die gewollte Arbeitsposition bewegbar ist.

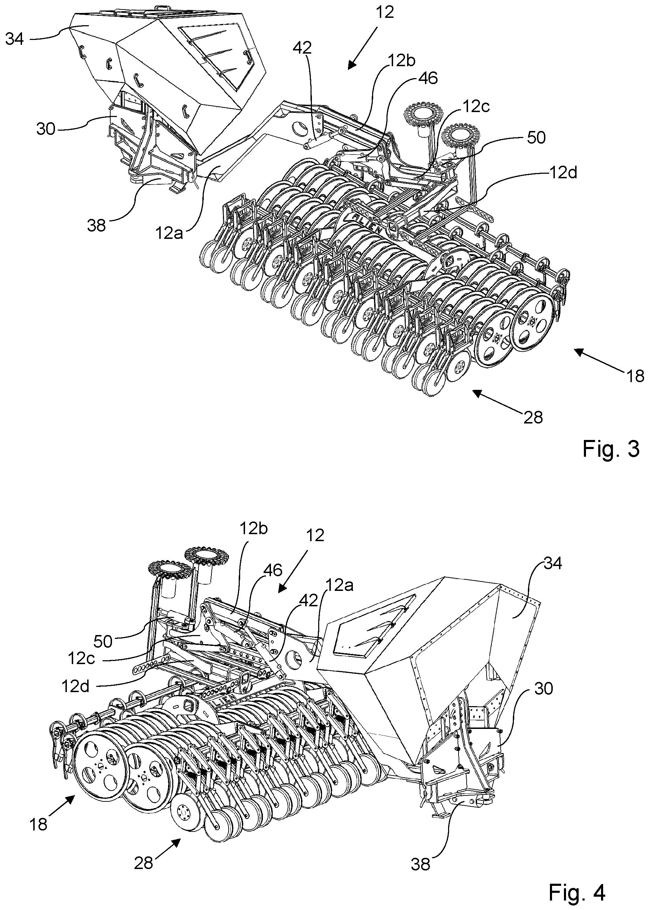

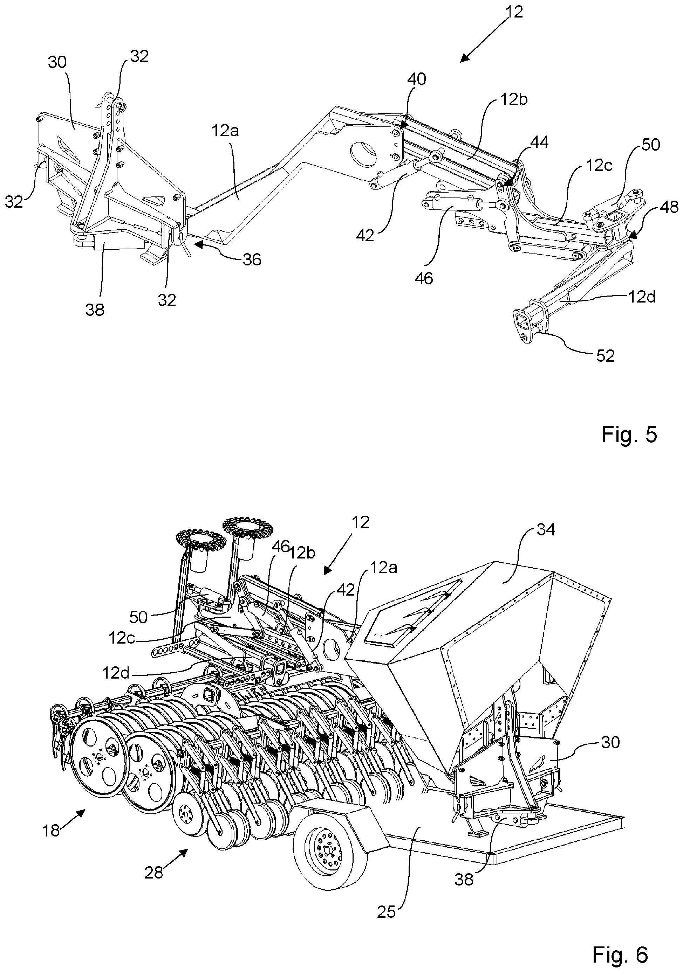

Der Schwenkarm 12 ist weiterhin derart ausgebildet und bewegbar, dass der Schwenkarm 12 die Saatbettbereitungseinheit 18 zum Überführen in eine Transportposition anhebt, falls erforderlich zuvor in eine Position bewegt, in der das Anheben keinen negativen Effekt auf die landwirtschaftlichen Maschine 10 hat, vorzugsweise in die zentrale Position 24. Der Schwenkarm 12 wird mit der Saatbettbereitungseinheit 18 dann so verschwenkt, dass der Schwenkarm 12 mit der Saatbettbereitungseinheit 18 eine geeignete Größe für den Transport auf bzw. an der landwirtschaftlichen Maschine 10, wie in Fig. 4 dargestellt, vorzugsweise für den Transport auf einem separaten Anhänger 25, wie in Fig. 6 dargestellt, bei einer maximalen Breite von 2,55 Meter und einem Gesamtgewicht mit Anhänger von bis zu 1.660 kg, einnimmt.

Fig. 2 zeigt eine perspektivische Ansicht der in Fig. 1 dargestellten landwirtschaftlichen Maschine 10 mit einem zusätzlich an der Heckseite 14 angekoppeltem Bodenbearbeitungsgerät 26, nämlich einen Volldrehpflug, bei der Arbeit. Fig. 2 zeigt vorteilhaft den Nutzen der Erfindung. Vorliegend kann die Bodenbearbeitung, vorliegend das Pflügen, und die Saatbettbereitung quasi in einem Arbeitsgang erfolgen. Das Bodenbearbeitungsgerät 26 und die Saatbettbereitungseinheit 18 arbeiten zwar Reihen versetzt, aber dennoch gleichzeitig und werden von der gleichen landwirtschaftlichen Maschine 10 gezogen hinsichtlich des Bodenbearbeitungsgerätes 26 bzw. geschoben hinsichtlich der Saatbettbereitungseinheit 18. Dreht die landwirtschaftliche Maschine 10 am Ende eines Feldes, um neue Reihen zu pflügen, kann die Saatbettbereitungseinheit 18 mittels des erfindungsgemäßen Schwenkarms 12 horizontal vor der Frontseite 16 der landwirtschaftlichen Maschine 10 von der einen Seite auf die andere Seite überführt werden, um so bei bereits gepflügten Reihen das Saatbett zu bereiten.

Vorteilhaft lässt sich sogar in dem genannten Arbeitsgang Saatgut und/oder Dünger ausbringen. Dafür ist vorgesehen, dass die Saatbettbereitungseinheit 18 eine daran anschließende Aussaateinheit 28 für Saatgut und/oder Dünger, vorzugsweise in Form von Granulat, aufweist.

Die bereits angesprochene Trägervorrichtung 30, welche zumindest teilweise als Rahmen oder Gestell ausgebildet ist, weist auf der einen Seite eine Kopplungseinrichtung 32 in Form von drei Aufnahmen auf und ist mit der landwirtschaftlichen Maschine 10 über die Kopplungsvorrichtung der Frontseite 16 gekoppelt. Auf der anderen Seite ist die Trägervorrichtung 30 mit dem Schwenkarm 12 gekoppelt und trägt diesen 12 samt Saatbettbereitungseinheit 18.

Wie in den Fig. 1 - 4 sowie 6 dargestellt ist ein zentral angeordneter Tank 34 vorgesehen, der das Saatgut und/oder den Dünger enthält, wobei der Tank 34 auf der Trägervorrichtung 30 angeordnet bzw. mit dieser verbunden ist. Der Tank 34 steht vorteilhaft mit einer Dosiereinheit in Verbindung bzw. weist diese auf, um Saatgut und/oder Dünger über die Aussaateinheit 28 auf oder in den Boden zu bringen.

Fig. 5 zeigt eine perspektivische Ansicht des erfindungsgemäßen Schwenkarms 12 im ausgeschwenkten Zustand. Der Schwenkarm 12 weist mehrere gelenkig miteinander verbundene Armsegmente 12a, 12b, 12c, 12d auf, wobei wenigstens einige der Armsegmente 12a, 12b, 12c, 12d mittels Aktuatoren 38, 42, 46, 50, vorliegend mittels Hydraulikzylinder, in vorgegebene Richtungen bewegbar sind.

Ein erstes Armsegment 12a des Schwenkarms 12 ist über wenigstens ein erstes Gelenk 36 mit der Trägervorrichtung 30 verbunden, wobei ein Aktuator 38, nämlich Hydraulikzylinder, zwischen der Trägervorrichtung 30 und dem ersten Armsegment 12a vorgesehen ist, wobei das erste Armsegment 12a, das erste Gelenk 36 und der Aktuator 38 so angeordnet und ausgebildet sind, dass das erste Armsegment 12a in einer horizontalen Ebene, in oder entgegen der Fahrtrichtung FR der landwirtschaftlichen Maschine 10 gesehen, bei entsprechender Betätigung des Aktuators 38 nach links und rechts verschwenkbar ist, wodurch der gesamte Schwenkarm 12 mit der angekoppelten Saatbettbereitungseinheit 18 in eine gewollte Position, insbesondere Arbeitsposition, auf der linken Seite 20 oder rechten Seite 22 oder jede Position dazwischen, insbesondere in eine zentrale Position 24, schwenkbar ist.

Ein zweites Armsegment 12b des Schwenkarms 12 ist über ein zweites Gelenk 40 mit dem ersten Armsegment 12a verbunden, wobei zwei Aktuatoren 42, vorliegend Hydraulikzylinder, zwischen dem ersten Armsegment 12a und dem zweiten Armsegment 12b vorgesehen sind, wobei das zweite Armsegment 12b, das zweite Gelenk 40 und die zwei Aktuatoren 42 so angeordnet und ausgebildet sind, dass das zweite Armsegment 12b bei entsprechender Betätigung der Aktuatoren 42 derart bewegbar ist, dass dieses und der Bereich des Schwenkarms 12, der zwischen dem zweiten Armsegment 12b und der Saatbettbereitungseinheit 18 angeordnet ist, zum Boden hin und vom Boden weg bewegbar ist, wodurch die am Schwenkarm 12 angekoppelte Saatbettbereitungseinheit 18 auf den Boden absetzbar und vom Boden abhebbar ist.

Ein drittes Armsegment 12c des Schwenkarms 12 ist über wenigstens ein drittes Gelenk 44 mit dem zweiten Armsegment 12b verbunden, wobei zwei Aktuatoren 46, vorliegend Hydraulikzylinder, zwischen dem zweiten Armsegment 12b und dem dritten Armsegment 12c vorgesehen sind, wobei das dritte Armsegment 12c, das dritte Gelenk 44 und die Aktuatoren 46 so angeordnet und ausgebildet sind, dass das dritte Armsegment 12c bei entsprechender Betätigung der Aktuatoren 46 derart bewegbar ist, dass dieses 12c und der Bereich des Schwenkarms 12, der zwischen dem dritten Armsegment 12c und der Saatbettbereitungseinheit 18 angeordnet ist, sich aus einer Ausganglage in horizontaler Ebene verlängert oder verkürzt, sich der Abstand der Saatbettbereitungseinheit 18 zum zweiten Armsegment 12b somit vergrößert oder verkleinert, wodurch die am Schwenkarm 12 angekoppelte Saatbettbereitungseinheit 18 auf eine gewünschte Spurbreite einstellbar ist.

Ein viertes Armsegment 12d des Schwenkarms 12 ist über ein viertes Gelenk 48 mit dem dritten Armsegment 12c verbunden, wobei ein Aktuator 50, vorliegend Hydraulikzylinder, zwischen dem dritten Armsegment 12c und dem vierten Armsegment 12d vorgesehen sind, wobei das vierte Gelenk 48, das vierte Armsegment 12d und der Aktuator 50 so angeordnet und ausgebildet sind, dass das vierte Armsegment 12d bei entsprechender Betätigung des Aktuators 50 derart bewegbar ist, dass dieses 12d in Längsrichtung des vierten Armsegments 12d als Ausgangslage gesehen in horizontaler Ebene nach links und rechts schwenkbar ist, wodurch die am Schwenkarm 12 angekoppelte Saatbettbereitungseinheit 18 lenkbar ist.

### Bezugsziffernliste

- 10: Landwirtschaftliche Maschine
- 12: Schwenkarm
- 12a: erstes Armsegment
- 12b: zweites Armsegment
- 12c: drittes Armsegment
- 12d: viertes Armsegment
- 14: Heckseite
- 16: Frontseite
- 18: Saatbettbereitungseinheit
- 20: linke Seite
- 22: rechte Seite
- 24: zentrale Position
- 25: Anhänger
- 26: Bodenbearbeitungsgerät
- 28: Aussaateinheit
- 30: Trägervorrichtung
- 32: Kopplungseinrichtung
- 34: Tank
- 36: erstes Gelenk
- 38: Aktuator
- 40: zweites Gelenk
- 42: Aktuator
- 44: drittes Gelenk
- 46: Aktuator
- 48: viertes Gelenk
- 50: Aktuator
- 52: Kopplungsstelle

- FR: Fahrtrichtung

## Patentansprüche

1. Landwirtschaftliche Maschine (10), vorzugsweise Zugmaschine, mit einem Schwenkarm (12), der mit dem einen Ende an der Heck- (14) oder vorzugsweise an der Frontseite (16) der landwirtschaftlichen Maschine (10) über eine an der Heck- (14) oder Frontseite (16) vorgesehenen Kopplungsvorrichtung, insbesondere eine Dreipunktaufnahme, angekoppelt ist, und der mit dem anderen Ende mit einer Bodenbereitungseinheit, vorzugsweise Saatbettbereitungseinheit (18), gekoppelt ist, wobei der Schwenkarm (12) derart ausgebildet ist, dass die Bodenbereitungseinheit in verschiedene Arbeitspositionen, nämlich auf die in oder entgegen der Fahrtrichtung (FR) der landwirtschaftlichen Maschine (10) gesehen linke Seite (20) oder rechte Seite (22) oder in jede Position zwischen der linken Seite (20) und der rechten Seite (22), insbesondere in eine zentrale Position (24), auf den Boden positionierbar ist, wobei die Bodenbereitungseinheit hierzu durch den Schwenkarm (12) horizontal, vorzugsweise in einer Ebene, vor der Heckseite (14) der landwirtschaftlichen Maschine (10) bewegbar ist, wenn der Schwenkarm (12) an der Heckseite (14) der landwirtschaftlichen Maschine (10) angekoppelt ist, oder horizontal, vorzugsweise in einer Ebene, vor der Frontseite (16) der landwirtschaftlichen Maschine (10) bewegbar ist, wenn der Schwenkarm (12) an der Frontseite (16) der landwirtschaftlichen Maschine (10) angekoppelt ist, wobei der Schwenkarm (12) mehrere gelenkig miteinander verbundene Armsegmente (12a, 12b, 12c, 12d) aufweist, wobei wenigstens einige der Armsegmente (12a, 12b, 12c, 12d) mittels Aktuatoren (38, 42, 46, 50), vorzugsweise mittels Hydraulikzylinder, in vorgegebenen Richtungen bewegbar sind, wobei eine Trägervorrichtung (30), vorzugsweise in Form eines Trägerrahmens, vorgesehen ist, die auf der einen Seite eine Kopplungseinrichtung (32), vorzugsweise drei Aufnahmen, aufweist und mit der landwirtschaftlichen Maschine (10) über die Kopplungsvorrichtung an deren Heckseite (14) oder Frontseite (16) koppelbar oder gekoppelt ist, und auf der anderen Seite mit dem Schwenkarm (12) gekoppelt ist und diesen vorzugsweise samt Bodenbereitungseinheit trägt,
wobei ein erstes Armsegment (12a) des Schwenkarms (12) über wenigstens ein erstes Gelenk (36) mit der Trägervorrichtung (30) verbunden ist, wobei wenigstens ein Aktuator (38), vorzugsweise Hydraulikzylinder, zwischen der Trägervorrichtung (30) und dem ersten Armsegment (12a) vorgesehen ist, wobei das erste Armsegment (12a), das erste Gelenk (36) und der zwischen der Trägervorrichtung (30) und dem ersten Armsegment (12a) vorgesehene wenigstens eine Aktuator (38) so angeordnet und ausgebildet sind, dass das erste Armsegment (12a) in einer horizontalen Ebene, in oder entgegen der Fahrtrichtung (FR) der landwirtschaftlichen Maschine (10) gesehen, bei entsprechender Betätigung des zwischen der Trägervorrichtung (30) und dem ersten Armsegment (12a) vorgesehenen wenigstens einen Aktuators (38) nach links und rechts schwenkbar ist, wodurch der gesamte Schwenkarm (12) mit der angekoppelten Bodenbereitungseinheit in eine gewollte Position, insbesondere Arbeitsposition, auf der linken Seite (20) oder rechten Seite (22) oder jede Position dazwischen, insbesondere in eine zentrale Position (24), schwenkbar ist,
wobei ein zweites Armsegment (12b) des Schwenkarms (12) über wenigstens ein zweites Gelenk (40) mit dem ersten Armsegment (12a) verbunden ist, wobei wenigstens ein, vorzugsweise zwei Aktuatoren (42), vorzugsweise Hydraulikzylinder, zwischen dem ersten Armsegment (12a) und dem zweiten Armsegment (12b) vorgesehen sind, wobei das zweite Armsegment (12b), das zweite Gelenk (40) und der zwischen dem ersten Armsegment (12a) und dem zweiten Armsegment (12b) vorgesehene wenigstens eine Aktuator (42) so angeordnet und ausgebildet sind, dass das zweite Armsegment (12b) bei entsprechender Betätigung des zwischen dem ersten Armsegment (12a) und dem zweiten Armsegment (12b) vorgesehenen wenigstens einen Aktuators (42) derart bewegbar ist, dass dieses (12b) und der Bereich des Schwenkarms (12), der zwischen dem zweiten Armsegment (12b) und der Bodenbereitungseinheit angeordnet ist, zum Boden hin und vom Boden weg bewegbar ist, wodurch die am Schwenkarm (12) angekoppelte Bodenbereitungseinheit auf den Boden absetzbar und vom Boden abhebbar ist,
wobei ein drittes Armsegment (12c) des Schwenkarms (12) über wenigstens ein drittes Gelenk (44) mit dem zweiten Armsegment (12b) verbunden ist, wobei wenigstens ein, vorzugsweise zwei Aktuatoren (46), vorzugsweise Hydraulikzylinder, zwischen dem zweiten Armsegment (12b) und dem dritten Armsegment (12c) vorgesehen sind, wobei das dritte Armsegment (12c), das dritte Gelenk (44) und der zwischen dem zweiten Armsegment (12b) und dem dritten Armsegment (12c) vorgesehene wenigstens eine Aktuator (46) so angeordnet und ausgebildet sind, dass das dritte Armsegment (12c) bei entsprechender Betätigung des zwischen dem zweiten Armsegment (12b) und dem dritten Armsegment (12c) vorgesehenen wenigstens einen Aktuators (46) derart bewegbar ist, dass dieses (12c) und der Bereich des Schwenkarms (12), der zwischen dem dritten Armsegment (12c) und der Bodenbereitungseinheit angeordnet ist, sich aus einer Ausganglage in horizontaler Ebene verlängert oder verkürzt, sich der Abstand der Bodenbereitungseinheit zum zweiten Armsegment (12c) somit vergrößert oder verkleinert, wodurch die am Schwenkarm (12) angekoppelte Bodenbereitungseinheit auf eine gewünschte Spurbreite einstellbar ist.

2. Landwirtschaftliche Maschine (10) nach Anspruch 1, **dadurch gekennzeichnet, dass** Schwenkarm (12) derart ausgebildet und bewegbar ist, dass die Bodenbereitungseinheit vom Boden anhebbar und auf den Boden absetzbar ist, wobei das Anheben oder Absetzen der Bodenbereitungseinheit an verschiedenen Positionen durchführbar ist, vorzugsweise jedoch an einer Position, an der die durch das Anheben bewirkte seitliche Belastung der landwirtschaftlichen Maschine (10) keinen negativen Effekt auf diese (10) hat, besonders bevorzugt somit in der zentralen Position (24) oder ausgehend von der Ankoppelung an die landwirtschaftliche Maschine (10) wegweisend von dieser (10) und in Längsrichtung und/oder Fahrtrichtung (FR) der landwirtschaftlichen Maschine (10) gesehen innerhalb eines spitzen Winkels von bis zu 90°, vorzugsweise von bis zu 60°, besonders bevorzugt von bis zu 30°.

3. Landwirtschaftliche Maschine (10) nach Anspruch 2, **dadurch gekennzeichnet, dass** der Schwenkarm (12) derart ausgebildet und bewegbar ist, dass die Position beim Absetzen mit der gewollten Arbeitsposition übereinstimmt oder die Bodenbereitungseinheit nach dem Absetzen auf den Boden mittels des Schwenkarms (12), vorzugsweise während der Fahrt, in die Arbeitsposition bewegbar ist.

4. Landwirtschaftliche Maschine (10) nach Anspruch 2 oder 3, **dadurch gekennzeichnet, dass** der Schwenkarm (12) derart ausgebildet und bewegbar ist, dass die Bodenbereitungseinheit durch diesen (12) zum Überführen in eine Transportposition anhebbar ist, falls erforderlich zuvor in eine Position bewegbar ist, in der das Anheben keinen negativen Effekt auf die landwirtschaftlichen Maschine (10) hat, vorzugsweise in die zentrale Position (24), und dass der Schwenkarm (12) mit der Bodenbereitungseinheit dann so verschwenkbar ist, dass von dem Schwenkarm (12) mit der Bodenbereitungseinheit eine geeignete Größe für den Transport, vorzugsweise für den Transport auf einem separaten Anhänger (25), einnehmbar ist.

5. Landwirtschaftliche Maschine (10) nach einem der vorherigen Ansprüche, **dadurch gekennzeichnet, dass** ein Bodenbearbeitungsgerät (26), vorzugsweise ein Volldrehpflug, oder ein Gruber vorgesehen ist, der an der nicht den Schwenkarm (12) aufweisenden Frontseite (16) oder vorzugsweise Heckseite (14) über eine dort vorgesehene Aufnahme, vorzugsweise Dreipunktaufnahme, angekoppelt ist.

6. Landwirtschaftliche Maschine (10) nach einem der vorherigen Ansprüche, **dadurch gekennzeichnet, dass** die Bodenbereitungseinheit, vorzugsweise die Saatbettbereitungseinheit (18), eine daran anschließende Aussaateinheit (28) für Saatgut und/oder Dünger, vorzugsweise in Form von Granulat, aufweist.

7. Landwirtschaftliche Maschine (10) nach einem der vorherigen Ansprüche, **dadurch gekennzeichnet, dass** ein zentral angeordneter Tank (34) vorgesehen ist, der Saatgut und/oder Dünger enthält, wobei der Tank (34) auf der Trägervorrichtung (30) angeordnet bzw. mit dieser verbunden ist.

8. Landwirtschaftliche Maschine (10) nach Anspruch 7, **dadurch gekennzeichnet, dass** der Tank (34) eine Dosiereinheit aufweist, um Saatgut und/oder Dünger über eine Aussaateinheit (28) auf oder in den Boden zu bringen.

9. Landwirtschaftliche Maschine (10) nach Anspruch 1, **dadurch gekennzeichnet, dass** ein viertes Armsegment (12d) des Schwenkarms (12) über ein viertes Gelenk (48) mit dem dritten Armsegment (12c) verbunden ist, wobei wenigstens ein Aktuator (50), vorzugsweise Hydraulikzylinder, zwischen dem dritten Armsegment (12c) und dem vierten Armsegment (12d) vorgesehen sind, wobei das vierte Gelenk (48), das vierte Armsegment (12d) und der wenigstens eine Aktuator (50) so angeordnet und ausgebildet sind, dass das vierte Armsegment (12d) bei entsprechender Betätigung des wenigstens einen Aktuators (50) derart bewegbar ist, dass dieses (12d) in Längsrichtung des vierten Armsegments (12d) als Ausgangslage gesehen in horizontaler Ebene nach links und rechts schwenkbar ist, wodurch die am Schwenkarm (12) angekoppelte Bodenbereitungseinheit lenkbar ist.

10. Landwirtschaftliche Maschine (10) nach Anspruch 1, **dadurch gekennzeichnet, dass** der wenigstens eine Aktuator (38) als Hydraulikzylinder, der zwischen der Trägervorrichtung (30) und dem ersten Armsegment (12a) angeordnet ist, mit dem wenigstens einen Aktuator (42) als Hydraulikzylinder, der zwischen dem ersten Armsegment (12a) und dem zweiten Armsegment (12b) angeordnet ist, hydraulisch verbunden ist und diese entsprechend mit dem gleichen Hydraulikdruck ansteuerbar sind.

11. Landwirtschaftliche Maschine (10) nach Anspruch 9, **dadurch gekennzeichnet, dass** das vierte Armsegment (12d) an dem Ende, das nicht mit dem dritten Armsegment (12c) verbunden ist, eine Kopplungsstelle (52) für die Bodenbereitungseinheit aufweist.

12. Schwenkarm (12) für eine landwirtschaftliche Maschine (10), wobei der Schwenkarm (12) mehrere gelenkig miteinander verbundene Armsegmente (12a, 12b, 12c, 12d) aufweist, wobei wenigstens einige der Armsegmente (12a, 12b, 12c, 12d) mittels Aktuatoren (38, 42, 46, 50), vorzugsweise mittels Hydraulikzylinder, in vorgegebenen Richtungen bewegbar sind, wobei der Schwenkarm mit einer Trägervorrichtung (30) auf der einen Seite der Trägervorrichtung gekoppelt ist, wobei die Trägervorrichtung (30) auf ihrer anderen Seite eine Kopplungseinrichtung (32) aufweist und mit der landwirtschaftlichen Maschine (10) über die Kopplungsvorrichtung (32) an deren Heckseite (14) oder Frontseite (16) koppelbar ist,
wobei ein erstes Armsegment (12a) des Schwenkarms (12) über wenigstens ein erstes Gelenk (36) mit der Trägervorrichtung (30) verbunden ist, wobei wenigstens ein Aktuator (38), vorzugsweise Hydraulikzylinder, zwischen der Trägervorrichtung (30) und dem ersten Armsegment (12a) vorgesehen ist, wobei das erste Armsegment (12a), das erste Gelenk (36) und der zwischen der Trägervorrichtung (30) und dem ersten Armsegment (12a) vorgesehene wenigstens eine Aktuator (38) so angeordnet und ausgebildet sind, dass das erste Armsegment (12a) in einer horizontalen Ebene, in oder entgegen der Fahrtrichtung (FR) der landwirtschaftlichen Maschine (10) gesehen, bei entsprechender Betätigung des zwischen der Trägervorrichtung (30) und dem ersten Armsegment (12a) vorgesehenen wenigstens einen Aktuators (38) nach links und rechts schwenkbar ist, wodurch der gesamte Schwenkarm (12) mit einer an diesem (12) ankoppelbaren Bodenbereitungseinheit in eine gewollte Position, insbesondere Arbeitsposition, auf der linken Seite (20) oder rechten Seite (22) oder jede Position dazwischen, insbesondere in eine zentrale Position (24), schwenkbar ist,
wobei ein zweites Armsegment (12b) des Schwenkarms (12) über wenigstens ein zweites Gelenk (40) mit dem ersten Armsegment (12a) verbunden ist, wobei wenigstens ein, vorzugsweise zwei Aktuatoren (42), vorzugsweise Hydraulikzylinder, zwischen dem ersten Armsegment (12a) und dem zweiten Armsegment (12b) vorgesehen sind, wobei das zweite Armsegment (12b), das zweite Gelenk (40) und der zwischen dem ersten Armsegment (12a) und dem zweiten Armsegment (12b) vorgesehene wenigstens eine Aktuator (42) so angeordnet und ausgebildet sind, dass das zweite Armsegment (12b) bei entsprechender Betätigung des zwischen dem ersten Armsegment (12a) und dem zweiten Armsegment (12b) vorgesehenen wenigstens einen Aktuators (42) derart bewegbar ist, dass dieses (12b) und der Bereich des Schwenkarms (12), der zwischen dem zweiten Armsegment (12b) und der ankoppelbaren Bodenbereitungseinheit angeordnet ist, zum Boden hin und vom Boden weg bewegbar ist, wodurch die am Schwenkarm (12) ankoppelbare Bodenbereitungseinheit auf den Boden absetzbar und vom Boden abhebbar ist,
wobei ein drittes Armsegment (12c) des Schwenkarms (12) über wenigstens ein drittes Gelenk (44) mit dem zweiten Armsegment (12b) verbunden ist, wobei wenigstens ein, vorzugsweise zwei Aktuatoren (46), vorzugsweise Hydraulikzylinder, zwischen dem zweiten Armsegment (12b) und dem dritten Armsegment (12c) vorgesehen sind, wobei das dritte Armsegment (12c), das dritte Gelenk (44) und der zwischen dem zweiten Armsegment (12b) und dem dritten Armsegment (12c) vorgesehene wenigstens eine Aktuator (46) so angeordnet und ausgebildet sind, dass das dritte Armsegment (12c) bei entsprechender Betätigung des zwischen dem zweiten Armsegment (12b) und dem dritten Armsegment (12c) vorgesehenen wenigstens einen Aktuators (46) derart bewegbar ist, dass dieses (12c) und der Bereich des Schwenkarms (12), der zwischen dem dritten Armsegment (12c) und der ankoppelbaren Bodenbereitungseinheit angeordnet ist, sich aus einer Ausganglage in horizontaler Ebene verlängert oder verkürzt, sich der Abstand der ankoppelbaren Bodenbereitungseinheit zum zweiten Armsegment (12c) somit vergrößert oder verkleinert, wodurch die am Schwenkarm (12) ankoppelbare Bodenbereitungseinheit auf eine gewünschte Spurbreite einstellbar ist.

13. Schwenkarm nach Anspruch 12, **dadurch gekennzeichnet, dass** ein viertes Armsegment (12d) des Schwenkarms (12) über ein viertes Gelenk (48) mit dem dritten Armsegment (12c) verbunden ist, wobei wenigstens ein Aktuator (50), vorzugsweise Hydraulikzylinder, zwischen dem dritten Armsegment (12c) und dem vierten Armsegment (12d) vorgesehen ist, wobei das vierte Gelenk (48), das vierte Armsegment (12d) und der zwischen dem dritten Armsegment (12c) und dem vierten Armsegment (12d) vorgesehene wenigstens eine Aktuator (50) so angeordnet und ausgebildet sind, dass das vierte Armsegment (12d) bei entsprechender Betätigung des zwischen dem dritten Armsegment (12c) und dem vierten Armsegment (12d) vorgesehenen wenigstens einen Aktuators (50) derart bewegbar ist, dass dieses (12d) in Längsrichtung des vierten Armsegments (12d) als Ausgangslage gesehen in horizontaler Ebene nach links und rechts schwenkbar ist, wodurch die am Schwenkarm (12) ankoppelbare Bodenbereitungseinheit lenkbar ist.

14. Schwenkarm nach Anspruch 12, **dadurch gekennzeichnet, dass** der wenigstens eine Aktuator (38) als Hydraulikzylinder, der zwischen der Trägervorrichtung (30) und dem ersten Armsegment (12a) angeordnet ist, mit dem wenigstens einen Aktuator (42) als Hydraulikzylinder, der zwischen dem ersten Armsegment (12a) und dem zweiten Armsegment (12b) angeordnet ist, hydraulisch verbunden ist und diese entsprechend mit dem gleichen Hydraulikdruck ansteuerbar sind.

15. Schwenkarm nach Anspruch 13, **dadurch gekennzeichnet, dass** das vierte Armsegment (12d) an dem Ende, das nicht mit dem dritten Armsegment (12c) verbunden ist, eine Kopplungsstelle (52) für die Bodenbereitungseinheit aufweist.

## Claims

1. Agricultural machine (10), preferably tractor, having a swivel arm (12) coupled with one end on the rear side (14) or preferably on the front side (16) of the agricultural machine (10) via a coupling device provided on the rear side (14) or front side (16), in particular a three-point linkage, and which is coupled at the other end to a soil preparation unit, preferably a seedbed preparation unit (18), wherein the swivel arm (12) is designed such that the soil preparation unit can be positioned in different working positions on the ground, namely on the left-hand side (20) or right-hand side (22) as viewed in or counter to the direction of travel (FR) of the agricultural machine (10), or in any position between the left-hand side (20) and the right-hand side (22), in particular in a central position (24); wherein the soil preparation unit is movable horizontally to this end, preferably in a plane, in front of the rear side (14) of the agricultural machine (10) by the swivel arm (12) when the swivel arm (12) is coupled to the rear side (14) of the agricultural machine (10), or can be moved horizontally, preferably in a plane, in front of the front side (16) of the agricultural machine (10), when the swivel arm (12) is coupled to the front side (16) of the agricultural machine (10), wherein the swivel arm (12) has a plurality of arm segments (12a, 12b, 12c, 12d) which are connected to one another in an articulated manner, wherein at least some of the arm segments (12a, 12b, 12c, 12d) are movable in predetermined directions by means of actuators (38, 42, 46, 50), preferably by means of hydraulic cylinders, wherein a carrier device (30), preferably in the form of a carrier frame, is provided, which has, on one side, a coupling device (32), preferably three receptacles, and can be coupled or is coupled to the agricultural machine (10) via the coupling device on its rear side (14) or front side (16), and is coupled on the other side to the swivel arm (12) and preferably supports it together with the soil preparation unit,
wherein a first arm segment (12a) of the swivel arm (12) is connected via at least one first joint (36) to the carrier device (30), wherein at least one actuator (38), preferably hydraulic cylinder, is provided between the carrier device (30) and the first arm segment (12a), wherein the first arm segment (12a), the first joint (36) and the at least one actuator (38) provided between the carrier device (30) and the first arm segment (12a) are arranged and formed in such a way that the first arm segment (12a) can be swivelled, as seen in a horizontal plane, in or counter to the direction of travel (FR) of the agricultural machine (10), with appropriate actuation of the at least one actuator (38) provided between the carrier device (30) and the first arm segment (12a) to the left and right, whereby the entire swivel arm (12) can be swivelled with the coupled soil preparation unit into a desired position, in particular working position, on the left-hand side (20) or right-hand side (22) or any position between them, in particular into a central position (24),
wherein a second arm segment (12b) of the swivel arm (12) is connected via at least a second joint (40) to the first arm segment (12a), wherein at least one, preferably two actuators (42), preferably hydraulic cylinders, is/are provided between the first arm segment (12a) and the second arm segment (12b), wherein the second arm segment (12b), the second joint (40) and the at least one actuator (42) provided between the first arm segment (12a) and the second arm segment (12b) are arranged and formed in such a way that the second arm segment (12b) can be moved with corresponding actuation of the at least one actuator (42) provided between the first arm segment (12a) and the second arm segment (12b) in such a way that this (12b) and that region of the swivel arm (12) which is arranged between the second arm segment (12b) and the soil preparation unit, can be moved towards and away from the ground, whereby the soil preparation unit coupled to the swivel arm (12) can be lowered to the ground and lifted off the ground,
wherein a third arm segment (12c) of the swivel arm (12) is connected via at least a third joint (44) to the second arm segment (12b), wherein at least one, preferably two actuators (46), preferably hydraulic cylinders, is/are provided between the second arm segment (12b) and the third arm segment (12c), wherein the third arm segment (12c), the third joint (44) and the at least one actuator (46) provided between the second arm segment (12b) and the third arm segment (12c) are arranged and formed in such a way that the third arm segment (12c) can be moved with corresponding actuation of the at least one actuator (46) provided between the second arm segment (12b) and the third arm segment (12c) in such a way that this (12c) and that region of the swivel arm (12) which is arranged between the third arm segment (12c) and the soil preparation unit are increased or decreased in size from a starting position in a horizontal plane, and the distance of the soil preparation unit from the second arm segment (12c) is thus increased or decreased in size, whereby the soil preparation unit coupled to the swivel arm (12) can be adjusted to a desired track width.

2. Agricultural machine (10) according to Claim 1, **characterized in that** the swivel arm (12) is designed and movable in such a way that the soil preparation unit can be lifted off the ground and lowered to the ground, wherein the lifting or lowering of the soil preparation unit can be carried out in different positions, but preferably in a position, in which the lateral load on the agricultural machine (10) caused by the lifting has no negative effect on this agricultural machine (10), particularly preferably therefore in the central position (24) or starting from the coupling to the agricultural machine (10) pointing away from the latter (10) and as seen in the longitudinal direction and/or direction of travel (FR) of the agricultural machine (10) within an acute angle of up to 90°, preferably up to 60°, especially preferably up to 30°.

3. Agricultural machine (10) according to Claim 2, **characterized in that** the swivel arm (12) is designed and movable in such a way that the position when lowering corresponds with the desired working position, or the soil preparation unit is movable after being lowered to the ground by means of the swivel arm (12), preferably during travel, into the working position.

4. Agricultural machine (10) according to Claim 2 or 3, **characterized in that** the swivel arm (12) is designed and movable in such a way that the soil preparation unit can be lifted by means of this (12) for transferring into a transport position, if necessary is movable beforehand into a position, in which the lifting has no negative effect on the agricultural machine (10), preferably into the central position (24), and that the swivel arm (12) together with the soil preparation unit can then be swivelled such that a suitable size for transport, preferably for transport on a separate trailer (25), can be assumed by the swivel arm (12) with the soil preparation unit.

5. Agricultural machine (10) according to one of the preceding claims, **characterized in that** a soil preparation unit (26), preferably a half-turn plough, or a cultivator is provided, which is coupled to the front side (16), which does not have the swivel arm (12), or preferably rear side (14) via a receptacle provided there, preferably a three-point linkage.

6. Agricultural machine (10) according to one of the preceding claims, **characterized in that** the soil preparation unit, preferably the seedbed preparation unit (18), has a sowing unit (28) adjoining it for seeds and/or fertilizer, preferably in the form of granules.

7. Agricultural machine (10) according to one of the preceding claims, **characterized in that** a centrally arranged tank (34) is provided, which contains seeds and/or fertilizer, wherein the tank (34) is arranged on the carrier device (30) or is connected to the latter.

8. Agricultural machine (10) according to Claim 7, **characterized in that** the tank (34) has a dispensing unit for bringing seeds and/or fertilizer to or into the ground via a sowing unit (28).

9. Agricultural machine (10) according to Claim 1, **characterized in that** a fourth arm segment (12d) of the swivel arm (12) is connected via a fourth joint (48) to the third arm segment (12c), wherein at least one actuator (50), preferably hydraulic cylinder, is provided between the third arm segment (12c) and the fourth arm segment (12d), wherein the fourth joint (48), the fourth arm segment (12d) and the at least one actuator (50) are arranged and formed such that the fourth arm segment (12d) can be moved in such a way, when the at least one actuator (50) is actuated accordingly, that it (12d) can be swivelled to the left and right in a horizontal plane as viewed in the longitudinal direction of the fourth arm segment (12d) as a starting position, whereby the soil preparation unit which is connected to the swivel arm (12) can be steered.

10. Agricultural machine (10) according to Claim 1, **characterized in that** the at least one actuator (38), as a hydraulic cylinder which is arranged between the carrier device (30) and the first arm segment (12a), is hydraulically connected to the at least one actuator (42), as a hydraulic cylinder which is arranged between the first arm segment (12a) and the second arm segment (12b), and they can be actuated correspondingly by way of the same hydraulic pressure.

11. Agricultural machine (10) according to Claim 9, **characterized in that** the fourth arm segment (12d) has a coupling point (52) for the soil preparation unit at the end which is not connected to the third arm segment (12c).

12. Swivel arm (12) for an agricultural machine (10), wherein the swivel arm (12) has a plurality of arm segments (12a, 12b, 12c, 12d) which are connected to one another in an articulated manner, wherein at least some of the arm segments (12a, 12b, 12c, 12d) are movable in predetermined directions by means of actuators (38, 42, 46, 50), preferably by means of hydraulic cylinders, wherein the swivel arm is coupled to a carrier device (30) on the one side of the carrier device, wherein the carrier device (30) has, on its other side, a coupling device (32) and can be coupled to the agricultural machine (10) via the coupling device (32) on its rear side (14) or front side (16),
wherein a first arm segment (12a) of the swivel arm (12) is connected via at least one first joint (36) to the carrier device (30), wherein at least one actuator (38), preferably hydraulic cylinder, is provided between the carrier device (30) and the first arm segment (12a), wherein the first arm segment (12a), the first joint (36) and the at least one actuator (38) provided between the support device (30) and the first arm segment (12a) are arranged and formed in such a way that the first arm segment (12a) can be swivelled to the left and right as seen in a horizontal plane, in or counter to the direction of travel (FR) of the agricultural machine (10), with appropriate actuation of the at least one actuator (38) provided between the carrier device (30) and the first arm segment (12a), whereby the entire swivel arm (12) together with a soil preparation unit which can be coupled to it (12) can be swivelled into a desired position, in particular working position, on the left-hand side (20) or right-hand side (22) or any position between them, in particular into a central position (24), wherein a second arm segment (12b) of the swivel arm (12) is connected via at least a second joint (40) to the first arm segment (12a), wherein at least one, preferably two actuators (42), preferably hydraulic cylinders, is/are provided between the first arm segment (12a) and the second arm segment (12b), wherein the second arm segment (12b), the second joint (40) and the at least one actuator (42) provided between the first arm segment (12a) and the second arm segment (12b) are arranged and formed in such a way that the second arm segment (12b) can be moved with appropriate actuation of the at least one actuator (42) provided between the first arm segment (12a) and the second arm segment (12b), in such a way that it (12b) and that region of the swivel arm (12) which is arranged between the second arm segment (12b) and the connectable soil preparation unit can be moved towards and away from the ground, whereby the soil preparation unit which can be connected to the swivel arm (12) can be lowered to the ground and lifted off the ground,
wherein a third arm segment (12c) of the swivel arm (12) is connected via at least a third joint (44) to the second arm segment (12b), wherein at least one, preferably two actuators (46), preferably hydraulic cylinders, is/are provided between the second arm segment (12b) and the third arm segment (12c), wherein the third arm segment (12c), the third joint (44) and the at least one actuator (46) provided between the second arm segment (12b) and the third arm segment (12c) are arranged and formed in such a way that the third arm segment (12c), with appropriate actuation of the at least one actuator (46) provided between the second arm segment (12b) and the third arm segment (12c), is movable in such a way that it (12c) and that region of the swivel arm (12) which is arranged between the third arm segment (12c) and the connectable ground preparation unit is extended or shortened from a starting position in a horizontal plane, the distance of the connectable soil preparation unit from the second arm segment (12c) is thus increased or reduced, whereby the soil preparation unit which can be coupled to the swivel arm (12) can be adjusted to a desired track width.

13. Swivel arm according to Claim 12, **characterized in that** a fourth arm segment (12d) of the swivel arm (12) is connected via a fourth joint (48) to the third arm segment (12c), wherein at least one actuator (50), preferably hydraulic cylinder, is provided between the third arm segment (12c) and the fourth arm segment (12d), wherein the fourth joint (48), the fourth arm segment (12d) and the at least one actuator (50) provided between the third arm segment (12c) and the fourth arm segment (12d) are arranged and formed in such a way that the fourth arm segment (12d) can be moved, with appropriate actuation of the at least one actuator (50) provided between the third arm segment (12c) and the fourth arm segment (12d), in such a way that it (12d) can be swivelled to the left and right in a horizontal plane as viewed in the longitudinal direction of the fourth arm segment (12d) as a starting position, whereby the soil preparation unit which can be connected to the swivel arm (12) can be steered.

14. Swivel arm according to Claim 12, **characterized in that** the at least one actuator (38), as a hydraulic cylinder which is arranged between the carrier device (30) and the first arm segment (12a), is hydraulically connected to the at least one actuator (42), as a hydraulic cylinder which is arranged between the first arm segment (12a) and the second arm segment (12b), and they can be controlled accordingly by way of the same hydraulic pressure.

15. Swivel arm according to Claim 13, **characterized in that** the fourth arm segment (12d) has a coupling point (52) for the soil preparation unit at the end which is not connected to the third arm segment (12c).

## Revendications

1. Machine agricole (10), de préférence véhicule tracteur, comprenant un bras pivotant (12) qui est accouplé par une extrémité à l'arrière (14) ou de préférence à l'avant (16) de la machine agricole (10) par l'intermédiaire d'un dispositif de couplage, en particulier d'un logement trois points, prévu à l'arrière (14) ou à l'avant (16), et qui est couplé par l'autre extrémité à une unité de préparation du sol, de préférence une unité de préparation de lit de semis (18), dans laquelle le bras pivotant (12) est réalisé de telle sorte que l'unité de préparation du sol peut être positionnée sur le sol dans différentes positions de travail, notamment du côté gauche (20) ou du côté droit (22), vu dans le sens de la marche (FR) ou le sens opposé de la machine agricole (10) ou dans toute position entre le côté gauche (20) et le côté droit (22), en particulier dans une position centrale (24), dans laquelle l'unité de préparation du sol peut à cet effet être déplacée par le bras pivotant (12) horizontalement, de préférence dans un plan, devant la partie arrière (14) de la machine agricole (10) lorsque le bras pivotant (12) est accouplé à l'arrière (14) de la machine agricole (10), ou horizontalement, de préférence dans un plan, devant la partie avant (16) de la machine agricole (10) lorsque le bras pivotant (12) est accouplé à l'avant (16) de la machine agricole (10), dans laquelle le bras pivotant (12) présente plusieurs segments de bras (12a, 12b, 12c, 12d) reliés ensemble de manière articulée, au moins certains des segments de bras (12a, 12b, 12c, 12d) pouvant être déplacés au moyen d'actionneurs (38, 42, 46, 50), de préférence au moyen de vérins hydrauliques, dans des directions prédéfinies, dans laquelle un dispositif porteur (30), de préférence sous la forme d'un châssis porteur, est prévu qui présente sur un côté un dispositif de couplage (32), de préférence trois logements, et peut être ou est couplé à la machine agricole (10) à l'arrière (14) ou à l'avant (16) de celle-ci par l'intermédiaire du dispositif de couplage, et qui est couplé sur l'autre côté au bras pivotant (12) et le porte de préférence avec l'unité de préparation du sol,
dans laquelle un premier segment de bras (12a) du bras pivotant (12) est relié au dispositif porteur (30) par l'intermédiaire d'au moins une première articulation (36), dans laquelle au moins un actionneur (38), de préférence un vérin hydraulique, est prévu entre le dispositif porteur (30) et le premier segment de bras (12a), dans laquelle le premier segment de bras (12a), la première articulation (36) et ledit au moins un actionneur (38) prévu entre le dispositif porteur (30) et le premier segment de bras (12a) sont disposés et réalisés de telle sorte que le premier segment de bras (12a) peut pivoter à gauche et à droite dans un plan horizontal, vu dans le sens de la marche (FR) ou dans le sens opposé de la machine agricole (10), en cas d'actionnement adéquat dudit au moins un actionneur (38) prévu entre le dispositif porteur (30) et le premier segment de bras (12a), de sorte que le bras pivotant (12) tout entier avec l'unité de préparation du sol accouplée peut pivoter dans une position voulue, en particulier une position de travail, sur le côté gauche (20) ou le côté droit (22) ou toute position entre celles-ci, en particulier dans une position centrale (24),
dans laquelle un deuxième segment de bras (12b) du bras pivotant (12) est relié au premier segment de bras (12a) par l'intermédiaire d'au moins une deuxième articulation (40), dans laquelle au moins un actionneur, de préférence deux actionneurs (42), de préférence des vérins hydrauliques, sont prévus entre le premier segment de bras (12a) et le deuxième segment de bras (12b), dans laquelle le deuxième segment de bras (12b), la deuxième articulation (40) et ledit au moins un actionneur (42) prévu entre le premier segment de bras (12a) et le deuxième segment de bras (12b) sont disposés et réalisés de telle sorte que le deuxième segment de bras (12b), en cas d'actionnement adéquat dudit au moins un premier actionneur (42) prévu entre le premier segment de bras (12a) et le deuxième segment de bras (12b), peut être déplacé de telle sorte que celui-ci (12b) et la zone du bras pivotant (12) qui est disposée entre le deuxième segment de bras (12b) et l'unité de préparation du sol peuvent être rapprochés du sol ou écartés du sol, de sorte que l'unité de préparation du sol accouplée au bras pivotant (12) peut être déposée sur le sol et soulevée du sol,
dans laquelle un troisième segment de bras (12c) du bras pivotant (12) est relié au deuxième segment de bras (12b) par l'intermédiaire d'au moins une troisième articulation (44), dans laquelle au moins un actionneur, de préférence deux actionneurs (46), de préférence des vérins hydrauliques, sont prévus entre le deuxième segment de bras (12b) et le troisième segment de bras (12c), dans laquelle le troisième segment de bras (12c), la troisième articulation (44) et ledit au moins un actionneur (46) prévu entre le deuxième segment de bras (12b) et le troisième segment de bras (12c) sont disposés et réalisés de telle sorte que le troisième segment de bras (12c), en cas d'actionnement adéquat dudit au moins un actionneur (46) prévu entre le deuxième segment de bras (12b) et le troisième segment de bras (12c), peut être déplacé de telle sorte que celui-ci (12c) et la zone du bras pivotant (12) qui est disposée entre le troisième segment de bras (12c) sont rallongés ou raccourcis à partir d'une position initiale dans le plan horizontal, c'est-à-dire que la distance entre l'unité de préparation du sol et le deuxième segment de bras (12c) augmente ou diminue, de sorte que l'unité de préparation du sol accouplée au bras pivotant (12) peut être réglée sur une largeur de voie souhaitée.

2. Machine agricole (10) selon la revendication **1, caractérisée en ce que** le bras pivotant (12) est réalisé et peut être déplacé de telle sorte que l'unité de préparation du sol peut être soulevée du sol et déposée sur le sol, dans laquelle le soulèvement ou la dépose de l'unité de préparation du sol peut être effectué(e) dans différentes positions, mais de préférence dans une position dans laquelle la sollicitation latérale de la machine agricole (10) provoquée par le soulèvement ne produit aucun effet négatif sur celle-ci (10), de manière particulièrement préférée donc dans la position centrale (24) ou en partant de l'accouplement à la machine agricole (10) en étant détourné de celle-ci (10), et vu dans la direction longitudinale et/ou le sens de la marche (FR) de la machine agricole (10), dans un angle aigu jusqu'à 90°, de préférence jusqu'à 60°, de manière particulièrement préférée jusqu'à 30°.

3. Machine agricole (10) selon la revendication 2, **caractérisée en ce que** le bras pivotant (12) est réalisé et peut être déplacé de telle sorte que la position lors de la dépose coïncide avec la position de travail voulue ou l'unité de préparation du sol peut être déplacée dans la position de travail après la dépose sur le sol au moyen du bras pivotant (12), de préférence pendant la marche.

4. Machine agricole (10) selon la revendication 2 ou 3, **caractérisée en ce que** le bras pivotant (12) est réalisé et peut être déplacé de telle sorte que l'unité de préparation du sol peut être soulevée par celui-ci (12) pour le transfert dans une position de transport, si nécessaire peut être déplacée dans une position dans laquelle le soulèvement ne produit aucun effet négatif sur la machine agricole (10), de préférence dans la position centrale (24), et **en ce que** le bras pivotant (12) avec l'unité de préparation du sol peut alors pivoter de telle sorte que le bras pivotant (12) avec l'unité de préparation du sol peut adopter une dimension adaptée au transport, de préférence au transport sur une remorque séparée (25).

5. Machine agricole (10) selon l'une quelconque des revendications précédentes, **caractérisée en ce qu'**un appareil de préparation du sol (26), de préférence une charrue réversible ou un cultivateur, est prévu qui est accouplé à l'avant (16) ne présentant pas le bras pivotant (12) ou de préférence à l'arrière (14) par l'intermédiaire d'un logement, de préférence un logement trois points, qui y est prévu.

6. Machine agricole (10) selon l'une quelconque des revendications précédentes, **caractérisée en ce que** l'unité de préparation du sol, de préférence l'unité de préparation de lit de semis (18), présente une unité d'ensemencement (28) pour des semences et/ou des engrais, de préférence sous forme de granulés.

7. Machine agricole (10) selon l'une quelconque des revendications précédentes, **caractérisée en ce qu'**un réservoir (34) disposé de manière centrale qui contient des semences et/ou des engrais est prévu, le réservoir (34) étant disposé sur le dispositif porteur (30) ou relié à celui-ci.

8. Machine agricole (10) selon la revendication 7, **caractérisée en ce que** le réservoir (34) présente une unité de dosage pour épandre des semences et/ou des engrais sur ou dans le sol par l'intermédiaire d'une unité d'ensemencement (28).

9. Machine agricole (10) selon la revendication 1, **caractérisée en ce qu'**un quatrième segment de bras (12d) du bras pivotant (12) est relié au troisième segment de bras (12c) par l'intermédiaire d'une quatrième articulation (48), dans laquelle au moins un actionneur (50), de préférence un vérin hydraulique, est prévu entre le troisième segment de bras (12c) et le quatrième segment de bras (12d), dans laquelle la quatrième articulation (48), le quatrième segment de bras (12d) et ledit au moins un actionneur (50) sont disposés et réalisés de telle sorte que le quatrième segment de bras (12d), en cas d'actionnement adéquat dudit au moins un actionneur (50), peut être déplacé de telle sorte que celui-ci (12d) peut pivoter à gauche et à droite dans un plan horizontal, vu dans la direction longitudinale du quatrième segment de bras (12d) comme position initiale, de sorte que l'unité de préparation du sol accouplée au bras pivotant (12) est orientable.

10. Machine agricole (10) selon la revendication 1, **caractérisée en ce que** ledit au moins un actionneur (38) en tant que vérin hydraulique qui est disposé entre le dispositif porteur (30) et le premier segment de bras (12a) est relié hydrauliquement audit au moins un actionneur (42) en tant que vérin hydraulique qui est disposé entre le premier segment de bras (12a) et le deuxième segment de bras (12b), et **en ce qu'**ils peuvent en conséquence être pilotés à la même pression hydraulique.

11. Machine agricole (10) selon la revendication 9, **caractérisée en ce que** le quatrième segment de bras (12d) présente à l'extrémité qui n'est pas reliée au troisième segment de bras (12c) un point de couplage (52) pour l'unité de préparation du sol.

12. Bras articulé (12) pour une machine agricole (10), dans lequel le bras pivotant (12) présente plusieurs segments de bras (12a, 12b, 12c, 12d) reliés ensemble de manière articulée, dans lequel au moins certains des segments de bras (12a, 12b, 12c, 12d) peuvent être déplacés au moyen d'actionneurs (38, 42, 46, 50), de préférence au moyen de vérins hydrauliques, dans des directions prédéfinies, dans lequel le bras pivotant est couplé à un dispositif porteur (30) sur un côté du dispositif porteur, dans lequel le dispositif porteur (30) présente de l'autre côté un dispositif de couplage (32) et peut être couplé à la machine agricole (10) par l'intermédiaire du dispositif de couplage (32) à l'arrière (14) ou à l'avant (16) de celle-ci,
dans laquelle un premier segment de bras (12a) du bras pivotant (12) est relié au dispositif porteur (30) par l'intermédiaire d'au moins une première articulation (36), dans laquelle au moins un actionneur (38), de préférence un vérin hydraulique, est prévu entre le dispositif porteur (30) et le premier segment de bras (12a), dans lequel le premier segment de bras (12a), la première articulation (36) et ledit au moins un actionneur (38) prévu entre le dispositif porteur (30) et le premier segment de bras (12a) sont disposés et réalisés de telle sorte que le premier segment de bras (12a) dans un plan horizontal, vu dans le sens de la marche (FR) ou le sens opposé de la machine agricole (10), peut pivoter à gauche et à droite en cas d'actionnement adéquat dudit au moins un actionneur (38) prévu entre le dispositif porteur (30) et le premier segment de bras (12a), de sorte que le bras pivotant (12) tout entier avec l'unité de préparation du sol pouvant être accouplée à celui-ci (12) peut pivoter dans une position voulue, en particulier une position de travail, sur le côté gauche (20) ou le côté droit (22) ou toute position entre celles-ci, en particulier dans une position centrale (24),
dans laquelle un deuxième segment de bras (12b) du bras pivotant (12) est relié au premier segment de bras (12a) par l'intermédiaire d'au moins une deuxième articulation (40), dans laquelle au moins un actionneur, de préférence deux actionneurs (42), de préférence des vérins hydrauliques, sont prévus entre le premier segment de bras (12a) et le deuxième segment de bras (12b), dans laquelle le deuxième segment de bras (12b), la deuxième articulation (40) et ledit au moins un actionneur (42) prévu entre le premier segment de bras (12a) et le deuxième segment de bras (12b) sont disposés et réalisés de telle sorte que le deuxième segment de bras (12b), en cas d'actionnement adéquat dudit au moins un premier actionneur (42) prévu entre le premier segment de bras (12a) et le deuxième segment de bras (12b), peut être déplacé de telle sorte que celui-ci (12b) et la zone du bras pivotant (12) qui est disposée entre le deuxième segment de bras (12b) et l'unité de préparation du sol peuvent être rapprochés du sol ou écartés du sol, de sorte que l'unité de préparation du sol accouplée au bras pivotant (12) peut être déposée sur le sol et soulevée du sol,
dans lequel un troisième segment de bras (12c) du bras pivotant (12) est relié au deuxième segment de bras (12b) par l'intermédiaire d'au moins une troisième articulation (44), dans lequel au moins un actionneur, de préférence deux actionneurs (46), de préférence des vérins hydrauliques, sont prévus entre le deuxième segment de bras (12b) et le troisième segment de bras (12c), dans laquelle le troisième segment de bras (12c), la troisième articulation (44) et ledit au moins un actionneur (46) prévu entre le deuxième segment de bras (12b) et le troisième segment de bras (12c) sont disposés et réalisés de telle sorte que le troisième segment de bras (12c), en cas d'actionnement adéquat dudit au moins un premier actionneur (46) prévu entre le deuxième segment de bras (12b) et le troisième segment de bras (12c), peut être déplacé de telle sorte que celui-ci (12c) et la zone du bras pivotant (12) qui est disposée entre le troisième segment de bras (12c) et l'unité de préparation du sol pouvant être accouplée se rallongent ou se raccourcissent dans le plan horizontal à partir d'une position initiale, c'est-à-dire que la distance entre l'unité de préparation du sol et le deuxième segment de bras (12c) augmente ou diminue, de sorte que l'unité de préparation du sol pouvant être accouplée au bras pivotant (12) peut être réglée sur une largeur de voie souhaitée.

13. Bras articulé selon la revendication 12, **caractérisé en ce qu'**un quatrième segment de bras (12d) du bras pivotant (12) est relié au troisième segment de bras (12c) par l'intermédiaire d'une quatrième articulation (48), dans lequel au moins un actionneur (50), de préférence un vérin hydraulique, est prévu entre le troisième segment de bras (12c) et le quatrième segment de bras (12d), dans lequel la quatrième articulation (48), le quatrième segment de bras (12d) et ledit au moins un actionneur (50) prévu entre le troisième segment de bras (12c) et le quatrième segment de bras (12d) sont disposés et réalisés de telle sorte que le quatrième segment de bras (12d), en cas d'actionnement adéquat dudit au moins un actionneur (50) prévu entre le troisième segment de bras (12c) et le quatrième segment de bras (12d), peut être déplacé de telle sorte que celui-ci (12d) peut pivoter à gauche et à droite dans la direction longitudinale du quatrième segment de bras (12d) comme position initiale, vu dans le plan horizontal, de sorte que l'unité de préparation du sol pouvant être accouplée au bras pivotant (12) est orientable.

14. Bras articulé selon la revendication 12, **caractérisé en ce que** ledit au moins un actionneur (38) en tant que vérin hydraulique qui est disposé entre le dispositif porteur (30) et le premier segment de bras (12a) est relié hydrauliquement audit au moins un actionneur (42) en tant que vérin hydraulique qui est disposé entre le premier segment de bras (12a) et le deuxième segment de bras (12b), et **en ce qu'**ils peuvent en conséquence être pilotés à la même pression hydraulique.

15. Bras articulé selon la revendication 13, **caractérisé en ce que** le quatrième segment de bras (12d) présente à l'extrémité qui n'est pas reliée au troisième segment de bras (12c) un point de couplage (52) pour l'unité de préparation du sol.
